# EUROPEAN PATENT SPECIFICATION

(11) **EP 2 262 187 B1**
(45) Date of publication and mention of the grant of the patent: **03.04.2013**
(21) Application number: 09305521.8
(22) Date of filing: 09.06.2009
(51) Int. Cl.: H04L 12/70, H04L 12/24, H04L 12/26

(54) **Bandwith allocation management for a set of data sessions in a communication network**
Bandbreitenzuweisungsverwaltung für einen Satz Datensitzungen in einem Kommunikationsnetzwerk
Gestion d'attribution de bande passante pour un ensemble de sessions de données dans un réseau de communication

(43) Date of publication of application: 15.12.2010
(73) Proprietor: Alcatel Lucent, 75007 Paris (FR)
(72) Inventor: Vetter, Peter, Summit, NJ 07901 (US); De Schepper, Koen, 2650, Edegem (BE)
(74) Representative: ALU Antw Patent Attorneys

(56) References cited:
- US-B1- 6 816 456
- LUBONSKI M ET AL: "An adaptation architecture to improve user-perceived QoS of multimedia services for enterprise remote desktop protocols" NEXT GENERATION INTERNET NETWORKS, 2005 ROME, ITALY 18-20 APRIL 2005, PISCATAWAY, NJ, USA,IEEE, 18 April 2005 (2005-04-18), pages 149-156, XP010798887 ISBN: 978-0-7803-8900-7
- DALAL A C ET AL: "Discerning user-perceived media stream quality through application-layer measurements" MULTIMEDIA SERVICES ACCESS NETWORKS, 2005. MSAN '05. 2005 1ST INTERNAT IONAL CONFERENCE ON ORLANDO, FL, USA 13-15 JUNE 2005, PISCATAWAY, NJ, USA,IEEE, 13 June 2005 (2005-06-13), pages 44-48, XP010821972 ISBN: 978-0-7803-9319-6

## Description

### Technical field of the invention

The present invention relates to the field of communication networks, especially to methods and devices for bandwidth allocation management therein.

### Background of the invention

Conventional resource admission control and resource allocation of data sessions over a network comprises signaling of the traffic specification or an assumed data rate (e.g. rate of HDTV). These techniques result often in an overestimation of the required bandwidth and thus in an inefficient use of the network resources, reducing the number of users that can be provided with an acceptable quality of experience or quality of service.

Especially elastic data sessions, as for instance TCP/IP sessions, have a greedy behavior and may typically use more bandwidth then really needed. For instance for some types of services, such as Internet TV or peer to peer (P2P) streaming the required bandwidth is not signaled to the resource admission control. These streaming services are often elastic and consume any bandwidth available. This behavior can be inherent, intrinsic to TCP/IP (transport control protocol/internet protocol), or can be caused because a P2P client does not only receive the necessary data to be viewed, but also uses additional available bandwidth (BW) to fill its cache with other content to become a seed for other peers.

The article by M. Lubonski et al., "An Adaptation Architecture to Improve User-Perceived QoS of Multimedia Services for Enterprise Remote Desktop Protocols", Next Generation Internet Networks, 2005 Rome, Italy; ISBN 978-0-7803-8900-7, p. 149-156, discloses a server-side component of an architecture for remote desktop environment aiming at improving user perception of the more demanding and network sensitive multimedia applications and services. The component maps of user-perceived Quality of Service (QoS) onto network-level performance parameters in order to improve overall end-to-end QoS. The set of perception rules defined for each application and type of user triggers the adaptation mechanisms to change the transmission parameters in order to meet end user expectations. The article does not disclose how the perception rules are derived or produced.

There is a need for methods and corresponding systems and devices for performing bandwidth allocation management for a set of elastic data sessions which is more efficient than the state of the art.

### Summary of the invention

When terms as "first", "second", "third" and the like are used, this does not necessarily mean that a sequential or that a chronological order is to be assumed.

The term "comprising", should be interpreted as such that it does not exclude other elements or steps.

It is an object of the present invention to provide a method for performing bandwidth allocation management for a set of data sessions in a communication network which solves at least one of the above mentioned problems.

According to a first aspect of the present invention a method is disclosed for performing bandwidth allocation management for a set of data sessions, to optimize the overall bandwidth usage in a communication network, comprising:
- determining a set of session categories;
- associating a session category for each session of the set of data sessions;
- monitoring the bandwidth usage of the data sessions per session category;
- determining a minimum bandwidth value for each session category;
wherein determining the minimum bandwidth value is based on bandwidth usage of sessions which have been identified as providing insufficient quality of experience to their respective users in a category.

The sessions which are providing insufficient quality of experience to their respective users can be early ending sessions and/or can be sessions for which the user has provided his, possibly explicit, feedback indicating such insufficiency.

One can assume that in practice, sessions are early ended when the user associated with the session experiences insufficient quality.

The data sessions can comprise multimedia sessions or any type of state of the art sessions. In advantageous embodiments of the present invention the method according to embodiments of the present invention is applied on a set of sessions which comprises or fully consists of elastic data sessions.

An elastic data session can for the purpose of the present invention be characterised by the dynamical adaptation of its data rate to the available bandwidth. When there is plenty of bandwidth, the session will increase its rate in a greedy way. When there is bandwidth is scarce, the rate is reduced, possibly even below an acceptable quality of experience. In the technical community, elastic services often also have the characteristic of no data dropping in case of congestion; this is not necessarily a requirement for sessions according to embodiments of the present invention.

The set of data sessions may comprise or may consist of IPTV sessions and/or peer-to-peer streaming sessions.

The minimum required bandwidth that is needed for an acceptable quality of experience for those sessions cannot be known, and does not need to be known a priori.

The optimization of the overall bandwidth usage in the communication network is preferably such that it guarantees sufficient quality of service and/or quality of experience for the set of users associated to the sessions carried by the network.

An early ending session can be defined as a session which is terminated by the user due to an insufficient quality of service/quality of experience of the content somewhere during the sessions, before the session was fully transferred or ended. In most cases early ending sessions will be terminated short after the start of the session. It may be terminated after a period the duration of which is in between 1 and 60 seconds, as for instance after about 1, 2, 3, 4, 5, 6, 7, 8, 9, 10, 15, 20, 25, 30, 35, 40, 45, 50, 55, 60 seconds, but is not limited thereto.

In addition to the observation of early ending sessions, the system can also learn about the minimum required bandwidth by an explicit user feedback about insufficient quality of experience of the session.

According to an aspect of the present invention it is assumed that all or at least a majority of sessions are ended early because of insufficient quality of experience is provided to the user. It has been shown that making this assumption, leading to the solution presented by aspects of the present invention, allows for the successful optimization of the overall bandwidth usage in a communication network.

The association of a session category to each session of the set of data sessions can be performed according to state of the art methods. It can for instance be performed by using a "fast" categorization, based on the first packets in a new session and can further be based on historical data of similar previously classified sessions. Other methods can also comprise identifiers in the header of a packet or deep packet inspection.

According to embodiments of the present invention the method comprises statistically analysing the bandwidth usage of the sessions per category in order to derive appropriate minimum bandwidth values.

These statistical analyses and collection of statistical information can be performed by different methods. The statistical analyses can be performed on all sessions, or on a subset of all sessions, as for instance on all or on a subset of early ending sessions, or on all or on a subset of long-lasting sessions. A long lasting session is any session that is not early ended and in which a substantial part of the content could be experienced with satisfying quality (in most, but not all, cases the session lasts until the end of the content).

According to embodiments of the present invention the association of a session category to each session of the set of data sessions comprises machine learning of bandwidth usage information of the respective sessions.

Machine learning as meant in aspects according to the present invention can be defined as a method for automatically improving the performance of a system (in this case the categorisation of sessions and the accurate estimation of the minimum bandwidth per category) based on the collection and statistical analysis of data over time.

Embodiments of the present invention comprise allocating bandwidth in the network for each of the data sessions, based on the corresponding minimum bandwidth value per session category.

According to preferred embodiments of the present invention the bandwidth allocation in the network is equal or larger than the minimum bandwidth value.

It can for instance be larger than 101 percent, or larger than 105 percent, larger than 110 percent, larger than 120 percent, larger than 130 percent, larger than 140 percent, larger than 150 percent, of the minimum bandwidth value. A margin above 100 percent can be chosen to cope with errors in the estimated minimum bandwidth. Another reason to include a margin is to allow for a temporary increase of the actual rate because of retransmissions for packet loss on the link.

According to embodiments of the present invention the set of session categories (can also include the category definitions) may be modified over time. The modification of the set of session categories can comprise adding or removing categories.

Methods according to embodiments of the present invention further comprise the detection of the same or similar bandwidth usage for sessions in originally different session categories and consequently combining these categories into one category. The combined category can be one of the original categories, but can also be a newly introduced category.

According to embodiments of the present invention the method can comprise:
- detecting sessions with deviating bandwidth usage for at least a subset of sessions within a session category;
- machine learning of the bandwidth usage of said deviating sessions.

The method can further comprise modifying the current category classification based on analysis of the bandwidth usage of the sessions per category.

According to preferred embodiments of the present invention the method further comprises the modification of the allocated minimum bandwidth for the sessions within a session category, over the life time of a session.

According to preferred embodiments of the present invention the method can be such that monitoring and statistical analysis of the bandwidth usage is performed independently for different periods in time, which correspond to distinct bandwidth usage behaviours for a predetermined session category, in order to allocate a different minimum required bandwidth for the different periods. The different periods can preferably be nonoverlapping sub periods.

According to embodiments of the present invention the monitored bandwidth usage is limited to the bandwidth usage of the first 5, 4, 3, 2, 1 second(s) of the sessions.

According to preferred embodiments of the present invention the monitored bandwidth usage can be limited to the bandwidth usage starting from 1, 2, 3, 4, 5 seconds after the session start-up.

According to a second aspect of the present invention a system for performing bandwidth allocation management for a set of data sessions in a network is disclosed, to optimise the overall bandwidth usage in the communication network, the system being adapted for
a. determining a set of session categories;
b. associating a session category to each session of the set of data sessions;
c. monitoring the bandwidth usage of the data sessions per session category;
d. determining a minimum bandwidth value for each session category;
wherein the system is further adapted for determining the minimum bandwidth value based on bandwidth usage of sessions which have been identified as providing insufficient quality of experience to their respective users in a category.

The sessions which are providing insufficient quality of experience to their respective users can be early ending sessions in a category and/or can be sessions for which the user has provided his, possibly explicit, feedback indicating such insufficiency.

According to a third aspect of the present invention, a network management module is disclosed adapted for associating a session category to each session of a set of data sessions, according to a set of predetermined session categories; adapted for
a. monitoring the bandwidth usage of the data sessions per session category;
b. determining a minimum bandwidth value for each session category;
wherein the management module is further adapted for determining the minimum bandwidth value based on bandwidth usage of sessions which have been identified as providing insufficient quality of experience to their respective users in a category.

Features and embodiments for the second and third aspect of the present invention, corresponding to features and embodiments of the first aspect of the present invention, are similarly considered to be within the scope of the present invention, as will be recognised by the skilled person.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

### Brief description of the drawings

The accompanying drawings are used to illustrate embodiments of the present invention.
Fig. 1 illustrates embodiments of the present invention in which a minimum bandwidth allocation per session category is determined.
Fig. 2 (A) illustrates embodiments of the present invention, wherein a session category is split up in two session categories.
Fig. 2 (B) illustrates embodiments of the present invention, wherein a two session categories are joined into a single session category.
Fig. 3 and Fig. 4 illustrate embodiments according to the present invention.

### Description of illustrative embodiments

The above and other advantageous features and objects of the invention will become more apparent and the invention will be better understood from the following detailed description when read in conjunction with the respective drawings.

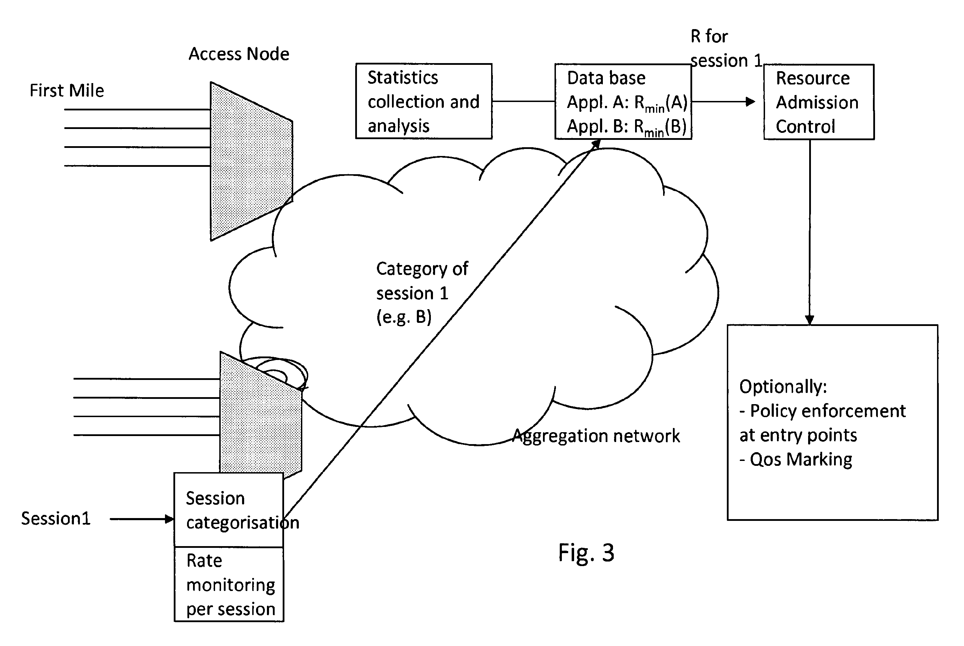

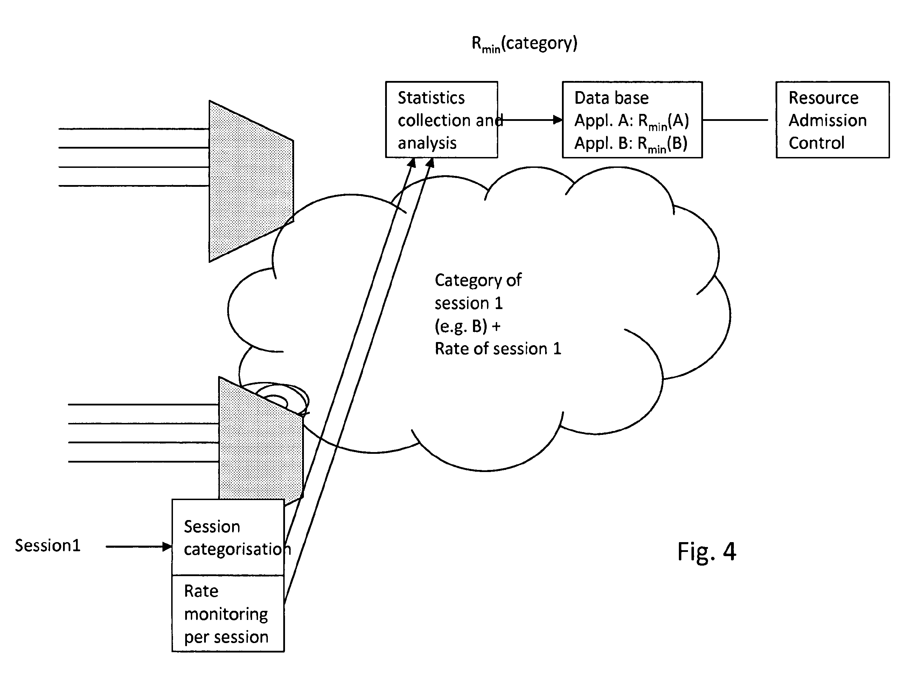

The description of aspects of the present invention is performed by means of particular embodiments and with reference to certain drawings but the invention is not limited thereto. Depicted figures are only schematic and should not be considered as limiting. Note that the allocation of functions in Fig. 3 and Fig. 4 are only given as example and other locations in the network architecture can be implemented.

One can think of different solutions in order to tackle the problems as mentioned above;
- deep packet inspection (DPI) methods can be used to identify session categories, e.g. an Internet TV or P2P streaming service.
- Internet TV or P2P streaming can be tagged as a better-than-best-effort class. This is known as a "Diffserv" approach, but does not provide the same quality of service guarantees as conventional resource admission control provides for IPTV services;
- when the required rate is not known, one can reserve a safe bandwidth for that session, for instance assuming the rate for High Definition Television (HDTV) or Standard Definition Television (SDT). This may very well be an overestimation of the really required rate and hence an inefficient use of resources;
- measurement based resource admission control by probing the rate used at the start of a session does not seem suited because the initial rate is not always representative for the session. One could think over overcoming this drawback, by using the initial rate only to recognize the type of service and to then allocate a corresponding "safe" bandwidth (HD or SD). One could think of using further measurements to fine-tune the reserved bandwidth afterwards. Such approach may be acceptable for non-elastic services, but has serious shortcoming for elastic streaming services, because an elastic service will always aim to fill the available bandwidth, even if a lower bandwidth would result in satisfying quality of service.
- one could think of a Pre-Congestion Notification (PCN) approach, wherein the metering algorithm detects a node as congested because of the elastic nature of the services, while new streaming services could still be accepted in reality. PCN accepts a new session based on an aggregate measurement of the congestion along an ingress-egress path, but does not feature rate policing to prevent the admitted elastic session from increasing their rates beyond an acceptable bandwidth during a service session.

According to aspects of the present invention cognitive systems are used which can categorize sessions in application groups (session categories) by inspecting and monitoring the packets, which are forming the data sessions. A database can then keep historical statistics of the used bandwidth per session category. The statistics can be based on monitoring the used bandwidth for the same application/session category by different users and/or historical bandwidth data per user. According to certain embodiments the lowest bandwidth of the statistical distribution indicates the minimum rate for an application/session category to have acceptable quality of experience. When a user has insufficient bandwidth available and receives an unacceptable quality of experience, he will typically interrupt the session shortly after the start of the session. The minimum rate deduced from historical data of these types of events and statistics thereof can be used for resource admission control. According to embodiments of the present invention, only the initial packets of a session are used in order to categorize the session. According to certain embodiments, monitoring the data sessions during part of or during the full duration of the session has been shown useful for updating the category definitions.

In embodiments of the present invention different functionalities can be present, as shown in Fig. 3. They may comprise: a cognitive function (Session categorization in Fig. 3 - a means for categorizing a data session or application that is started up), a monitoring function (a monitoring means for the data rate per session), a statistics database (a means for storing historical information and analyzing statistics there from), a look-up table that associates a minimum bandwidth to a session category, and for instance an interface to a resource admission control function (a resource admission control means). The means for categorizing the data sessions/applications that are started up, can be adapted to inspect the first packets of a session only (for instance the first 1, 2, 4, 5, 6, 8 packets) to group 95% of all sessions in categories, without identifying exactly to what service they belong. Other approaches can comprise deep packet inspection or signature analysis. Still other embodiments may comprise the use of user profile information in order to perform the categorization, or the use of service identifiers in the header of the packet (e.g. type of service, subset of destination or source addresses, protocol identifier, destination or source ports).

According to embodiments of the present invention the system can monitor the data rate, for instance the average rate, used in a session. In alternative embodiments for instance other rates may be monitored as for instance the higher speed rate at start-up of a session which should be allowed for fast zapping and filling buffers. Allocation of a higher minimum bandwidth value is then appropriate for a certain period at the start, compared to the remainder of the session (the latter can then be for instance a sustained minimum rate). Other embodiments can comprise the allocation of different minimum bandwidth values for each of a plurality (more than two) of subsequent subperiods of the session.In still other embodiments also other aspects can be monitored in order to provide a temporal state of an application/session as there are for instance "paused", "full buffer", "empty buffer", ... These parameters can be used to configure the priority scheduling of the different sessions.

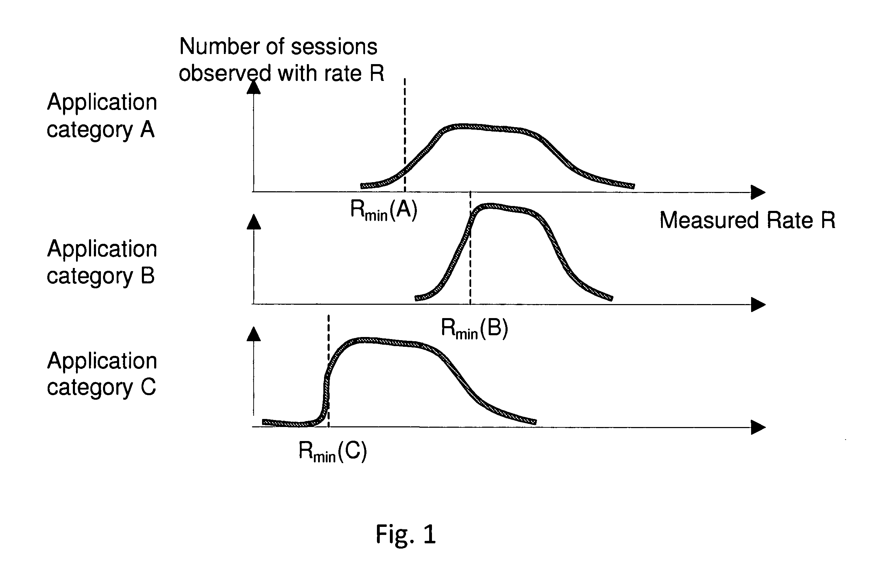

The measured data rate for the monitored sessions can then be added to a statistics database per application/session category (see Fig. 1). According to certain embodiments it is possible to only include those measurements for which this session lasts longer than a minimum period of time (for instance longer than 3 seconds, 5 seconds, 10 seconds, 15 seconds, 20 seconds, 25 seconds, 30 seconds). If the session time shows to be shorter then the predetermined minimum time, it is likely that the user (manually or automatically by the application) detects an unacceptable quality of experience and terminates the session. A minimum rate in the statistical distribution of the number of sessions in function of a measured data rate, can be used as a minimum rate for the resource admission control system. This minimum rate can for instance also be provided with a margin (for instance 5%, 10%, 15%, 20%, 25%, 50% of the cumulative distribution) to exclude cases of users that keep the session open even at marginal quality or to cope with additional rate required for packet retransmission in case of packet loss.

The minimum rate can be deduced by various statistical or mathematical methods, such as for instance a pre-defined threshold or percentage in a cumulative distribution, or a change of curvature of the resulting S-shaped curve.

The data rate can be collected over an entire network or for different sessions of an individual user. Preferably, the assumption can be made that all links in the network (for instance an access network domain) have the same loss rate, so that they comprise a similar bandwidth overhead for the transmissions. For instance in a DSL network, typically 1-2% retransmissions are present (which is within the margin of for instance 10%). The minimum rate as derived above for each of the session categories can then be passed to the resource admission control functionality or means and possibly to any policy enforcement function present as a traffic specification for the new session.

Methods according to embodiments of the present invention can be used in principle for any resource admission control system, such as for instance a first mile resource admission control or a resource admission control for aggregation network. This typically occurs as follows: the minimum rate is used to check if additional sessions/sessions can be allowed in a given session category/traffic class of an aggregate link. The minimum rate can also be used to configure a policer (for instance a token bucket policer with a given buffer size and rate) or for a set of policers (for instance to allow a first initial download to fill a buffer combined with an average rate).

According to embodiments of the present invention, in order to optimize the learning of changing services and new services, there is preferably an opportunity for exploration. For the purpose of the present description, "exploration" can be defined as a mechanism to observe the effect of slightly modified values on the system, and can be used in order to optimize these values. To challenge the decisions made by the learner, a small number of failures should exist. If not enough wrong cases are detected in the system, they can be inflicted. For instance, by strictly enforcing the learned bandwidth or a bandwidth smaller than the learned bandwidth on a small number of sessions, the system can confirm or deny the correctness or the learned bandwidths.

Another source of exploration can be monitoring unmanaged sessions in the best effort category. The latter source of exploration can be a solution where the operator chooses not to allow for small failures for admitted sessions (for instance in order to respect a service level agreement with the subscriber). In such case, the system can not learn an improved lower bandwidth by observing the admitted sessions in a class of service for which a minimum bandwidth has been allocated. The system can learn an improved lower bandwidth by observing sessions of the same category that were not admitted and remained in a lower class of service (best effort), but were not early ended and hence the user was satisfied with the experience at a lower rate than the minimum bandwidth currently in the database of the system.

At the deployment start of a new service of which no historical data is available in any network, the minimum rate can be deduced from statistical data of sessions transmitted in a best effort class of service.

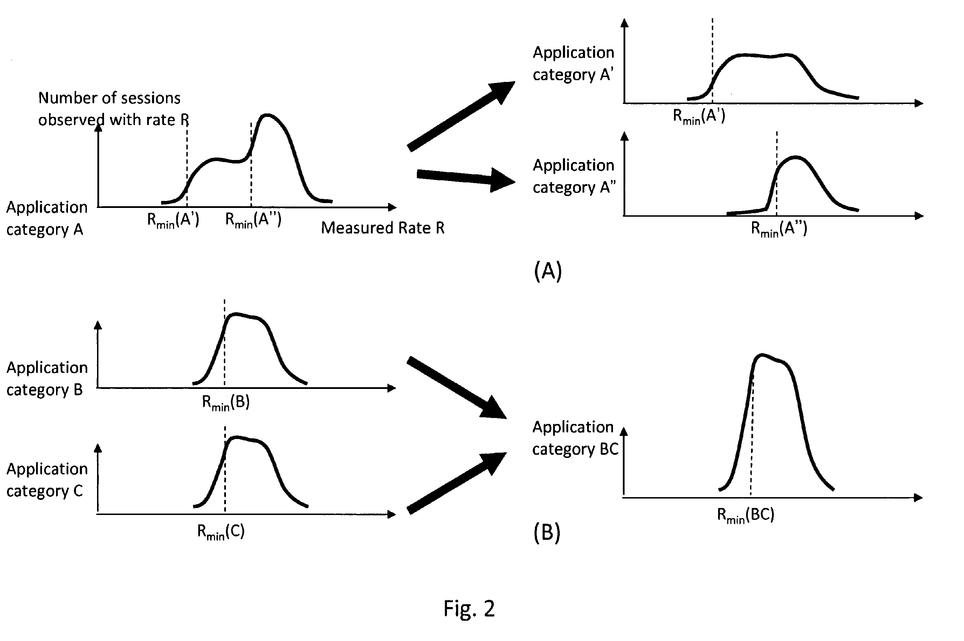

According to embodiments of the present invention, the observed distribution of number of sessions per rate can be used to improve (e.g. train) the categorization of sessions (This is illustrated in Figures 2A and 2B). For instance, when the statistical distribution of a category A shows a distinct second threshold rate Rₘᵢₙ(A"), it may suggest that the category consists of two subcategories A' and A" (see Fig. 2A). E.g. it may consist of two types of video sessions of the same application, but with different screen resolution. The categorization module (e.g. DPI, machine learning engine) can then compare
- samples of packets at rate Rₘᵢₙ(A') < R <Rₘᵢₙ(A"), which only contain category A',
- samples at packets at rate R > Rₘᵢₙ(A"), which contain category A' and A",
to learn distinguishing between the subcategories.

As another example, illustrated in Fig. 2B, the minimum rate of categories B and C can be the same, which suggests that B and C can be treated as a single category BC for the purpose of identifying a minimum rate.

According to embodiments of the present invention, the method can also be used when the rate requirements are varying during the lifetime of a session. E.g. the required rate may be higher at the start of a session to fill video frame buffers that cope with rate variations, and can be followed by an average rate for the remainder of the session. The higher rate at the start improves the fast channel change experience. The statistics collection will observe
a) minimum rate at which users remain connected during a starting interval (e.g. one or a few seconds),
b) followed by observation of minimum average rate at a longer view time.

The rate of (a) is expected to be larger than the rate of (b), but (a) needs to be reserved by the RAC only for a short period of time.

Fig. 3 illustrates the categorisation of a new session based on a categorisation function in the access node, the association of a minimum bandwidth to the identified category based on a central database, the allocation of the minimum bandwidth by a resource admission control function, and, optionally, the configuration of the rate for other QoS functions, such as policy enforcement or QoS class marking.

Fig. 4 illustrates how the system continuously learns the minimum bandwidth usage per category by continuously monitoring the rate per session and statistically analysing the collected data.

Embodiments of the present invention can be used for Internet TV that features a single session streamed from a server to a client, or for a peer to peer streaming application in which a session consists of multiple sessions from different peers. As all traffic in an access and an aggregation network passes through the edge node, all packets coming from different peer sources in the global network will follow the same path from the edge node to the end terminal via the aggregation and access network. Resource reservation is hence meaningful for the session, i.e. a bundle of sessions between the edge and the end-user terminal. The session cannot be identified by conventional flow identifiers such as source and destination address (there is a multitude of source addresses possible, with a multitude of port addresses), but the session can then be identified for instance by the subscriber's IP-address (i.e. the destination address) and other identifiers such as a class of service or a more sophisticated session category classification function as described above.

The skilled person will appreciate that embodiments of the present invention allow for resource reservation of elastic streaming services that do not feature explicit signaling of the traffic specification of the required rate. The system can adapt itself to changing application and network behavior.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

## Claims

1. A method for performing bandwidth allocation management for a set of data sessions, to optimise the overall bandwidth usage in a communication network, comprising
a. determining a set of session categories;
b. associating a session category to each session of said set of data sessions;
c. monitoring the bandwidth usage of said data sessions per session category; **characterised by**
d. determining a minimum bandwidth value for each session category based on said monitoring;
wherein said determining said minimum bandwidth value is based on bandwidth usage of sessions which have been identified as providing insufficient quality of experience to their respective users in a category.

2. A method according to claim 1, wherein said sessions which have been identified as providing insufficient quality of experience to their respective users are early ending sessions and/or sessions for which the user has provided his, possibly explicit, feedback indicating such insufficiency.

3. A method according to claim 1 or 2, comprising statistically analysing the bandwidth usage of said sessions per category in order to derive appropriate minimum bandwidth values.

4. A method according to any of the previous claims, wherein said associating a session category to each session of said set of data sessions comprises machine learning of bandwidth usage information of said sessions.

5. A method according to any of the previous claims, further comprising allocating bandwidth in the network for each of said data sessions, based on the corresponding minimum bandwidth value per session category.

6. A method according to claim 5, wherein said bandwidth allocation in the network is equal or larger than said minimum bandwidth value.

7. A method according to any of the previous claims, wherein said set of session categories is modified over time.

8. A method according to claim 7, wherein modifying said set of session categories comprises adding or removing categories.

9. A method according to any of claims 7 to 8, comprising the detection of similar bandwidth usage for sessions in originally different session categories and consequently combining these categories into one category.

10. A method according to any of claims 7 to 9, comprising:
a. detecting sessions with deviating bandwidth usage for at least a subset of sessions within a session category;
b. machine learning of the bandwidth usage of said deviating sessions.

11. A method according to any of the previous claims, comprising modifying the current category classification based on analysis of the bandwidth usage of said sessions per category.

12. Method according to any of claim 1 to 11, further comprising the modification over their life time of the allocated minimum bandwidth for said sessions within a session category.

13. Method according to claim 12, wherein said monitoring and statistical analysis of said bandwidth usage is performed independently for different periods in time, which correspond to distinct bandwidth usage behaviours for a given session category, in order to allocate a different minimum required bandwidth for said different periods.

14. A method according to any of the previous claims, wherein said set of sessions comprises elastic data sessions.

15. A system for performing bandwidth allocation management for a set of data sessions in a network, to optimise the overall bandwidth usage in said communication network, said system being adapted for
a. determining a set of session categories;
b. associating a session category to each session of said set of data sessions;
c. monitoring the bandwidth usage of said data sessions per session category; **characterised by**
d. determining a minimum bandwidth value for each session category based on said monitoring;
wherein said system is further adapted for determining said minimum bandwidth value based on bandwidth usage of sessions which have been identified as providing insufficient quality of experience to their respective users in a category.

16. A network management module adapted for associating a session category to each session of a set of data sessions, according to a set of predetermined session categories; adapted for
a. monitoring the bandwidth usage of said data sessions per session category; chacraterised by
b. determining a minimum bandwidth value for each session category based on said monitoring;
wherein said management module is further adapted for determining said minimum bandwidth value based on sessions which have been identified as providing insufficient quality of experience to their respective users in a category.

## Patentansprüche

1. Verfahren zum Durchführen der Bandbreitenzuweisungsverwaltung für einen Satz von Datensitzungen, um die Nutzung der Gesamtbandbreite in einem Kommunikationsnetzwerk zu optimieren, umfassend
a. Bestimmen eines Satzes von Sitzungskategorien;
b. Zuordnen einer Sitzungskategorie zu einer jeden Sitzung des besagten Satzes von Datensitzungen;
c. Überwachen der Bandbreitennutzung der besagten Datensitzungen pro Sitzungskategorie, **gekennzeichnet durch**
d. Bestimmen eines minimalen Bandbreitenwertes für jede Sitzungskategorie auf der Basis der besagten Überwachung;
wobei das besagte Bestimmen des besagten minimalen Bandbreitenwertes auf der Bandbreitennutzung von Sitzungen, für welche identifiziert wurde, dass sie ihren jeweiligen Nutzern in einer Kategorie eine unzureichende Erlebnisqualität bereitstellen, basiert.

2. Verfahren nach Anspruch 1, wobei die besagten Sitzungen, für welche identifiziert wurde, dass sie ihren jeweiligen Nutzern eine unzureichende Erlebnisqualität bereitstellen, frühzeitig endende Sitzungen und/oder Sitzungen, für welche der Nutzer seine möglicherweise eindeutige Rückmeldung in Bezug auf einen solchen Mangel geliefert hat, sind.

3. Verfahren nach Anspruch 1 oder 2, umfassend das statistische Analysieren der Bandbreitennutzung der besagten Sitzungen pro Kategorie, um entsprechende minimale Bandbreitenwerte davon abzuleiten.

4. Verfahren nach einem beliebigen der vorstehenden Ansprüche, wobei das besagte Zuordnen einer Sitzungskategorie zu jeder Sitzung des besagten Satzes von Datensitzungen das maschinelle Lernen von Bandbreitennutzungsinformationen der besagten Sitzungen umfasst.

5. Verfahren nach einem beliebigen der vorstehenden Ansprüche, weiterhin umfassend das Zuweisen von Bandbreiten in dem Netzwerk für eine jede der besagten Datensitzungen auf der Basis des entsprechenden minimalen Bandbreitenwertes pro Sitzungskategorie.

6. Verfahren nach Anspruch 5, wobei die besagte Bandbreitenzuweisung im Netzwerk dem besagten minimalen Bandbreitenwert entspricht oder diesen überschreitet.

7. Verfahren nach einem beliebigen der vorstehenden Ansprüche, wobei der besagte Satz von Sitzungskategorien im Zeitablauf modifiziert wird.

8. Verfahren nach Anspruch 7, wobei das Modifizieren des besagten Satzes von Sitzungskategorien das Hinzufügen oder Entfernen von Kategorien umfasst.

9. Verfahren nach einem beliebigen der Ansprüche 7 bis 8, umfassend das Erkennen einer gleichartigen Bandbreitennutzung für Sitzungen in ursprünglich unterschiedlichen Sitzungskategorien, und das anschließende Kombinieren dieser Kategorien zu einer Kategorie.

10. Verfahren nach einem beliebigen der Ansprüche 7 bis 9, umfassend:
a. Erkennen von Sitzungen mit abweichender Bandbreitennutzung für mindestens einen Teilsatz von Sitzungen innerhalb einer Sitzungskategorie;
b. maschinelles Lernen der Bandbreitennutzung der besagten abweichenden Sitzungen.

11. Verfahren nach einem beliebigen der vorstehenden Ansprüche, umfassend das Modifizieren der aktuellen Klassifikation der Kategorien auf Basis der Analyse der Bandbreitennutzung der besagten Sitzungen pro Kategorie.

12. Verfahren nach einem beliebigen der Ansprüche 1 bis 11, weiterhin umfassend das Modifizieren, im Ablauf ihrer Lebensdauer, der zugewiesenen minimalen Bandbreite für die besagten Sitzungen innerhalb einer Sitzungskategorie.

13. Verfahren nach Anspruch 12, wobei die besagte Überwachung und die statistische Analyse der besagten Bandbreitennutzung unabhängig für unterschiedliche Zeitperioden, welche unterschiedlichen Bandbreitennutzungsverhaltensweisen für eine gegebene Sitzungskategorie entsprechen, durchgeführt werden, um für die besagten verschiedenen Perioden ein unterschiedliche erforderliche minimale Bandbreite zuzuweisen.

14. Verfahren nach einem beliebigen der vorstehenden Ansprüche, wobei der besagte Satz von Sitzungen elastische Datensitzungen umfasst.

15. System zum Durchführen der Bandbreitenzuweisungsverwaltung für einen Satz von Datensitzungen in einem Netzwerk, um die Nutzung der Gesamtbandbreite in dem besagten Kommunikationsnetzwerk zu optimieren, wobei das System für das Durchführen der folgenden Schritte ausgelegt ist:
a. Bestimmen eines Satzes von Sitzungskategorien;
b. Zuordnen einer Sitzungskategorie zu einer jeden Sitzung des besagten Satzes von Datensitzungen;
c. Überwachen der Bandbreitennutzung der besagten Datensitzungen pro Sitzungskategorie, **gekennzeichnet durch**
d. Bestimmen eines minimalen Bandbreitenwertes für jede Sitzungskategorie auf der Basis der besagten Überwachung;
wobei das besagte System weiterhin dazu ausgelegt ist, den besagten minimalen Bandbreitenwert auf Basis der Bandbreitennutzung von Sitzungen, für welche identifiziert wurde, dass sie ihren jeweiligen Nutzern in einer Kategorie eine unzureichende Erlebnisqualität bereitstellen, zu bestimmen.

16. Netzwerkverwaltungsmodul, ausgelegt für das Zuordnen einer Sitzungskategorie zu jeder Sitzung eines Satzes von Datensitzungen gemäß einem Satz von vorbestimmten Sitzungskategorien, ausgelegt für
a. das Überwachen der Bandbreitennutzung der besagten Datensitzungen pro Sitzungskategorie; **gekennzeichnet durch**
b. das Bestimmen einer minimalen Bandbreite für jede Sitzungskategorie auf Basis der besagten Überwachung;
wobei das besagte Verwaltungsmodul weiterhin für das Bestimmen des besagten minimalen Bandbreitenwertes auf der Basis von Sitzungen, für welche identifiziert wurde, dass sie ihren jeweiligen Nutzern in einer Kategorie eine unzureichende Erlebnisqualität bereitstellen, ausgelegt ist.

## Revendications

1. Procédé pour réaliser la gestion de l'attribution de la largeur de bande pour un ensemble de sessions de données afin d'optimiser l'utilisation globale de la largeur de bande dans un réseau de communication, comprenant les étapes suivantes :
a. détermination d'un ensemble de catégories de session ;
b. association d'une catégorie de session à chaque session dudit ensemble de sessions de données ;
c. surveillance de l'utilisation de la largeur de bande desdites sessions de données par catégorie de session ; **caractérisé par**
d. détermination d'une valeur de largeur de bande minimale pour chaque catégorie de session en se basant sur ladite surveillance ;
ladite détermination de ladite valeur de largeur de bande minimale se basant sur l'utilisation de la largeur de bande des sessions qui ont été identifiées comme produisant une qualité insuffisante ressentie par leurs utilisateurs respectifs dans une catégorie.

2. Procédé selon la revendication 1, selon lequel lesdites sessions qui ont été identifiées comme produisant une qualité insuffisante ressentie par leurs utilisateurs respectifs sont des sessions qui s'arrêtent prématurément et/ou des sessions pour lesquelles l'utilisateur a produit une réaction, vraisemblablement explicite, indiquant une telle insuffisance.

3. Procédé selon la revendication 1 ou 2, comprenant l'analyse statistique de l'utilisation de la largeur de bande desdites sessions par catégorie en vue de dériver les valeurs de largeur de bande minimales appropriées.

4. Procédé selon l'une quelconque des revendications précédentes, selon lequel ladite association d'une catégorie de session à chaque session dudit ensemble de sessions de données comprend l'apprentissage machine des informations d'utilisation de la largeur de bande desdites sessions.

5. Procédé selon l'une quelconque des revendications précédentes, comprenant en outre l'attribution de la largeur de bande dans le réseau pour chacune desdites sessions de données en se basant sur la valeur de largeur de bande minimale correspondante par catégorie de session.

6. Procédé selon la revendication 5, selon lequel ladite attribution de la largeur de bande est égale ou supérieure à ladite valeur de largeur de bande minimale.

7. Procédé selon l'une quelconque des revendications précédentes, selon lequel ledit ensemble de catégories de session est modifié dans le temps.

8. Procédé selon la revendication 7, selon lequel la modification dudit ensemble de catégories de session comprend l'ajout ou le retrait de catégories.

9. Procédé selon l'une quelconque des revendications 7 à 8, comprenant la détection d'une utilisation similaire de la largeur de bande pour les sessions se trouvant originellement dans des catégories de session différentes et, en conséquence, la combinaison de ces catégories en une catégorie.

10. Procédé selon l'une quelconque des revendications 7 à 9, comprenant les étapes suivantes :
a. détection des sessions qui présentent un usage différent de la largeur de bande pour au moins un sous-ensemble de sessions au sein d'une catégorie de session ;
b. apprentissage machine de l'utilisation de la largeur de bande desdites sessions présentant une différence.

11. Procédé selon l'une quelconque des revendications précédentes, comprenant la modification de la classification de catégorie actuelle en se basant sur l'analyse de l'utilisation de la largeur de bande desdites sessions par catégorie.

12. Procédé selon l'une quelconque des revendications 1 à 11, comprenant la modification sur leur durée de vie de la largeur de bande minimale attribuée pour lesdites sessions au sein d'une catégorie de session.

13. Procédé selon la revendication 12, selon lequel ladite surveillance et ladite analyse statistique de ladite utilisation de la largeur de bande sont effectuées indépendamment pendant des périodes différentes, lesquelles correspondent à des comportements d'utilisation distincts de la largeur de bande pour une catégorie de session donnée, afin d'attribuer une largeur de bande minimale requise différente pour lesdites différentes périodes.

14. Procédé selon l'une quelconque des revendications précédentes, selon lequel ledit ensemble de sessions comprend des sessions de données élastiques.

15. Système pour réaliser la gestion de l'attribution de la largeur de bande pour un ensemble de sessions de données dans un réseau afin d'optimiser l'utilisation globale de la largeur de bande dans ledit réseau de communication, ledit système étant adapté pour la :
a. détermination d'un ensemble de catégories de session ;
b. association d'une catégorie de session à chaque session dudit ensemble de sessions de données ;
c. surveillance de l'utilisation de la largeur de bande desdites sessions de données par catégorie de session ; **caractérisé par**
d. détermination d'une valeur de largeur de bande minimale pour chaque catégorie de session en se basant sur ladite surveillance ;
ledit système étant en outre adapté pour déterminer ladite valeur de largeur de bande minimale en se basant sur l'utilisation de la largeur de bande des sessions qui ont été identifiées comme produisant une qualité insuffisante ressentie par leurs utilisateurs respectifs dans une catégorie.

16. Module de gestion de réseau adapté pour associer une catégorie de session à chaque session d'un ensemble de sessions de données conformément à un ensemble de catégories de session prédéterminées ; adapté pour la
a. surveillance de l'utilisation de la largeur de bande desdites sessions de données par catégorie de session ; **caractérisé par**
b. détermination d'une valeur de largeur de bande minimale pour chaque catégorie de session en se basant sur ladite surveillance ;
ledit module de gestion étant en outre adapté pour déterminer ladite valeur de largeur de bande minimale en se basant sur les sessions qui ont été identifiées comme produisant une qualité insuffisante ressentie par leurs utilisateurs respectifs dans une catégorie.
